# EUROPEAN PATENT SPECIFICATION

(11) **EP 0 531 832 B1**
(45) Date of publication and mention of the grant of the patent: **15.11.1995**
(21) Application number: 92114775.7
(22) Date of filing: 28.08.1992
(51) Int. Cl.: C05F 17/02

(54) **A stirring and composting apparatus**
Rühr- und Kompostiergerät
Dispositif de mélange et compostage

(30) Priority: 09.09.1991 JP 255958/91; 24.10.1991 JP 278114/91
(43) Date of publication of application: 17.03.1993
(73) Proprietor: DAIWA CO., LTD., Chuo-ku, Tokyo (JP)
(72) Inventor: Ueda, Susumu, Kawaguchi-shi, Saitama-ken (JP); Kureha, Hiroshi, Minamisaitama-gun, Saitama-ken (JP); Yamamoto, Yutaka, Nagareyama-shi, Chiba-ken (JP); Kanazawa, Shitoshi, Kawasaki-shi, Kanagawa-ken (JP)
(74) Representative: KUHNEN, WACKER & PARTNER

(56) References cited:
- EP-A- 0 233 637
- FR-A- 2 150 550
- US-A- 3 114 622
- PATENT ABSTRACTS OF JAPAN vol. 14, no. 427 (C-758)13 September 1990
- PATENT ABSTRACTS OF JAPAN vol. 13, no. 79 (C-571)22 February 1989

## Description

### Field of the Invention

The present invention relates to a stirring and composting apparatus for, for example, producing manure of good quality from excrement of livestock by composting it.

### Prior Art

A stirring and composting apparatus shown in Japanese Patent Application Publication No. 1990-164785 is known. This apparatus comprises, as shown in Figs. 7 and 8, a composter 1 of a cylindrical shape, a rail 2 arranged along on the peripheral edge of the composter 1, a frame 3 bridged between a central base 1A of the composter 1 and the rail 2. The frame 3 is equipped with wheels 3A rolling on the rail 2 so that they can move the frame 3 around the central base 1A. Endless belts 4 vertically arranged are held by the frame 3, and vanes 5 are arranged equidistantly on the endless belt 4. The vanes 5 scrape material M accumulated in the composter 1 and transfer them in a vertical direction (shown as (a)-(b)). A pressure board 6 is arranged at a short distance from the vanes 5.

The vanes 5 of the endless belts 4 cast off material M over the pressure board 6 so that the pressure caused by material M acts on the pressure board 6 and drives the frame 3 in a direction (c).

In the figures, numeral 7 denotes pulleys for winding the endless belts 4, and numeral 8 denotes a motor with a speed reducer for driving the pulleys 7. Frame 3, endless belts 4, vanes 5, pressure board 6, pulleys 7 and motor with a speed reducer 8 constitute a stirring apparatus 100.

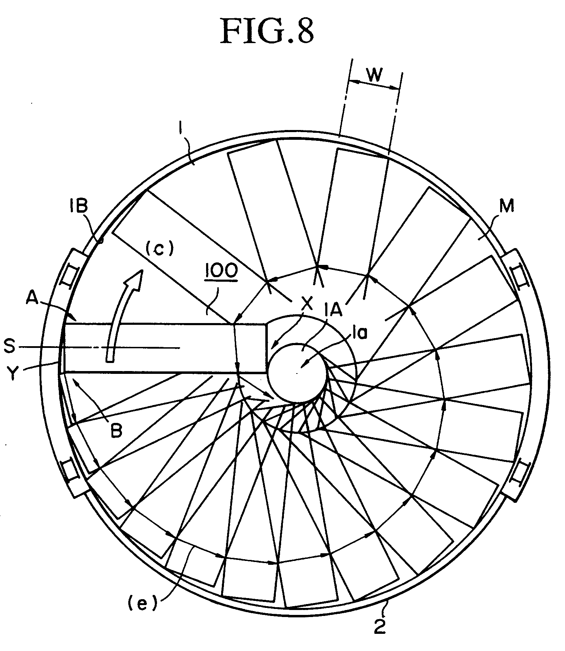

In the stirring and composting apparatus, as shown in Fig. 8, the center line S of the stirring apparatus 100 is off from the center 1a of the composter 1, that is, the rotational center of the stirring apparatus 100 is eccentric to the composter 1. With this configurational relationship, when the motor 8 drives the endless belt 4 intermittently, material M located on point A is transferred to point B.

By repeating such a process, material M is transferred along the arrows (e) towards the center of the composter 1 by degree, and is simultaneously stirred and mixed.

Accordingly, by supplying material M in the vicinity of the outer peripheral wall 1B of the composter 1, material M is stirred and composted until it is driven to the central base 1A of the composter 1, and is drawn out at the vicinity of the central base 1A. Thus, by the apparatus, manure can be continuously produced from a material M with a high efficiency.

However, by means of the above-described stirring and composting apparatus, since the center line S of the stirring apparatus 100 is off from the central base 1A of the composter 1, and the stirring apparatus 100 moves forward in the direction (c), material M may enter into the space X, between the stirring apparatus 100 and the central base 1A of the composter 1, or into the space Y, between the stirring apparatus 100 and the outer peripheral wall 1B of the composter 1. Material M in these spaces will interfere with the movement of the stirring apparatus 100 along the direction (c), and disrupt the smooth operation, the stirring and composting of material M, of the apparatus.

Further, by means of the above-described stirring and composting apparatus, material M is moved along the arrows (e) toward the center of the composter 1 by repeating the transfer of material M from point A to point B as shown in Fig. 8. Therefore, if the thickness W of the stirring apparatus 100 is the same, a longer period of time is necessary for material to travel from the outer periphery to the center 1a in a composter 1 of a large diameter than in a composter of a smaller diameter. This means that the time for such a composting process varies according to the dimension of the composter 1, so as to generate a large variance in processing time for composting, causing the quality of the products to vary as well.

The main reason for this is because the transferring distance (the distance of transfer from A to B in Fig. 8) of the stirring apparatus 100 of material M at each scraping operation is determined according to the thickness W of the stirring apparatus 100. In order to solve this problem, the thickness W of the stirring apparatus must be made relatively large when the diameter of the composter 1 is large, so as to increase the transferring distance of one scraping operation, and must be made relatively small when the diameter of the composter 1 is small, so as to decrease the transferring distance of one scraping operation. By doing so, the holding time of material M in the apparatus for composting is uniformized without being influenced by the dimensions of the composter 1.

However, in order to carry this out, the thickness W of the stirring apparatus 100 must be adjusted in accordance with the capacity of the stirring and composting apparatus, which increases the equipment cost or the operational cost of the stirring and composting apparatus.

### SUMMARY OF THE INVENTION

The present invention attempts to solve the above-described problems and is aimed at providing an apparatus which can prevent material M from entering into the space between the stirring apparatus 100 and the central base 1A of the composter 1 (shown by signature X), or the space between the stirring apparatus 100 and the outer peripheral wall 1B of the composter 1 (shown by signature Y), so that an easy operation of stirring and composting material M is possible.

This invention attempts to present an apparatus capable of controlling the transferring speed of material M toward the center or the peripheral of the composter 1, that is capable of uniformizing the holding time of material in the composter 1 without being influenced by the thickness W of the stirring apparatus 100 or the dimension of the composter 1, so that production of manure of a stable quality, in addition to maintenance of low equipment and operational costs, are possible.

The purpose of the present invention is to accomplish the objectives mentioned above, and thus supplies a stirring and composting apparatus as follows in Claim 1.

According to the present invention, a transferring means is provided which transfers material from one side of the frame to the other side. Additionally, a guiding means is provided which leads material in a radial direction of the composter when material is cast off from the transferring means at the other side of the frame.

Since the center of the stirring apparatus is provided at a position not eccentric to the composter, there is no space for material to enter between the stirring apparatus and the central base which supports the stirring apparatus, or between the stirring apparatus and the outer peripheral wall of the composter.

Further, by changing the angle of the guiding plate, the travelling speed of material in the radial direction can be controlled independent of the thickness of the stirring apparatus, so that material can stay in the composter for a predetermined period of time necessary for composting.

Further, since the travelling speed of material in the radial direction can be controlled by adjusting the guiding means, control of the travelling speed of material is easier than the conventional method since it is unnecessary to change the thickness of the stirring apparatus according to the diameter of the composter.

### BRIEF DESCRIPTION OF THE DRAWING

Fig. 1 is a plan view showing the supply of material.
Fig. 2 is a cross-sectional view along the line II-II of Fig. 1.
Fig. 3 is a cross-sectional view along the line III-III of Fig. 1.
Fig. 4 is a view along the line IV-IV of Fig. 1.
Fig. 5 is a view showing a guiding device of the present invention.
Fig. 6 is a view showing another embodiment of the guiding device of the present invention.

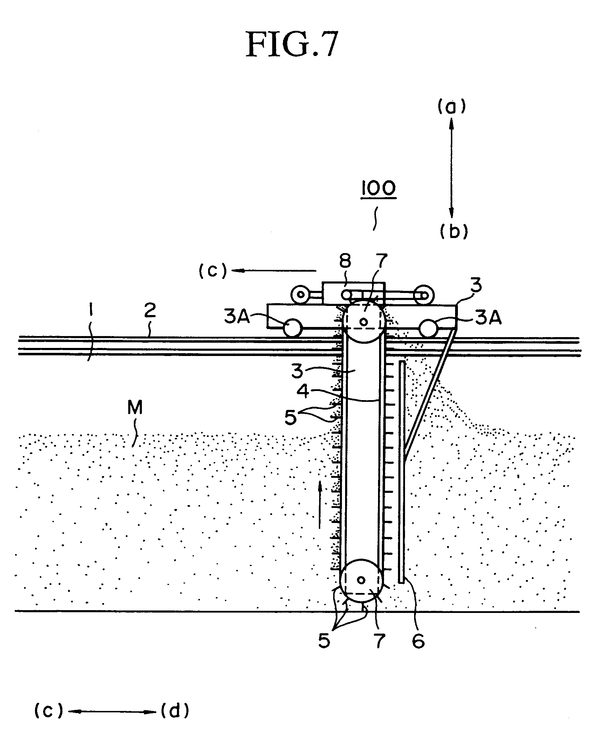

Fig. 7 is an elevational view showing the conventional stirring and composting apparatus.
Fig. 8 is a plan view showing the configuration of stirring apparatus and its movement of the conventional stirring and composting apparatus.

### DESCRIPTION OF THE PREFERRED EMBODIMENT

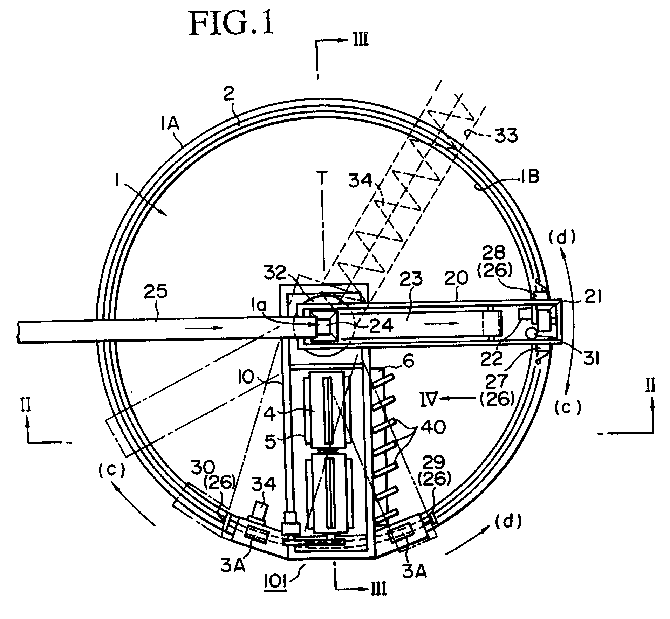

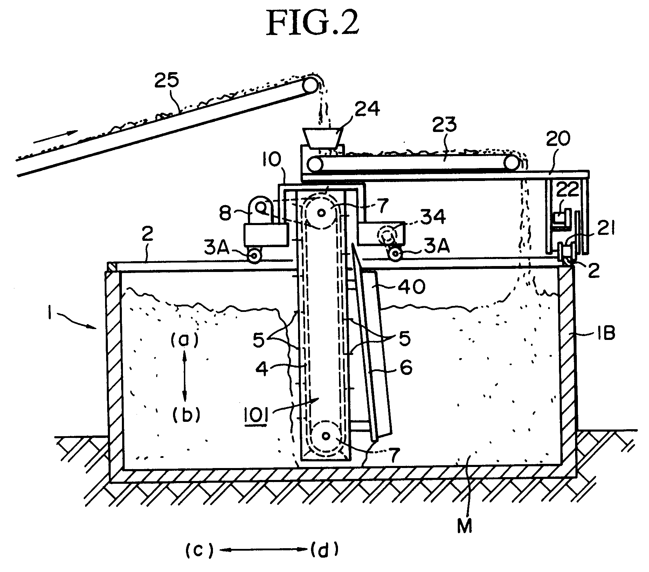

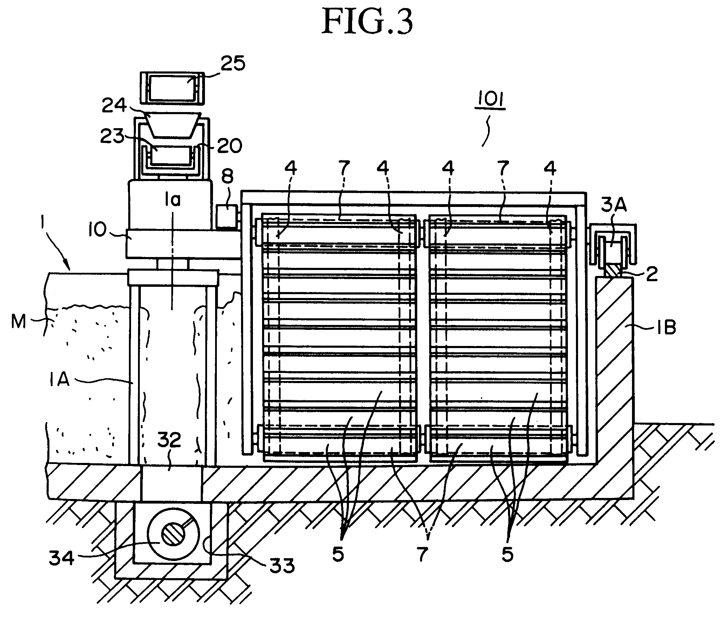

The preferred embodiment of the present invention will be described with reference to Figs. 1 to 6.

Similar components to that of the apparatus described as prior art will be denoted by the same numerals and an explanation will be omitted, such that numeral 1 depicts the composter, numeral 1A depicts the central base of the composter 1, numeral 2 depicts the rails, numeral 3A depicts the wheels equipped to the apparatus, numeral 4 depicts the endless belts, numeral 5 depicts the vanes, numeral 6 depicts the pressure board, numeral 7 depicts the pulleys, numeral 8 depicts the motor with a speed reducer.

The stirring apparatus 101 of the present invention and its relating configuration will be described in detail with reference to Figs. 1 to 3.

The stirring apparatus 101 is constructed to swing around in a direction (c) when the wheels 3A revolve about the central base 1A of the composter 1, in the same way as the conventional apparatus.

The stirring apparatus 101 is held by the frame 10 in a position relative to the center 1a of the central base 1A of the composter 1 in a manner as follows. The center line T of the stirring apparatus 101 along its longitudinal direction lies radial to the composter 1 so as to pass through the center 1a of the central base 1A of the composter 1. Through this construction, the stirring apparatus 101 is arranged to run about the center 1a of the central base 1A without being eccentric to the composter 1.

On the other hand, the stirring apparatus 101 scrapes material M from the bottom of the composter 1 by means of the upward movement of the vanes 5 driven by the motor 8, and transfers material M to cast it off at the other side of the frame. Consequently, material M applies static pressure on the pressure board 6 which is fixed to the stirring apparatus 101, therefore, the pressure automatically moves the stirring apparatus 101 in direction (c). The time necessary for one rotation of the stirring apparatus 101 around the central base 1A of the composter 1 is approximately 4 to 5 hours. It takes about a week to draw the manure out of the composter 1 from supply of material M. This period of time necessary for material M from its charge to output is determined according to the declining angle of the guiding plate 40, 44 described hereinafter.

A winding arm 20 is arranged on the composter 1 and above the stirring apparatus 101 for supplying material M into the composter 1.

The winding arm 20 is rotatably held at one end thereof by the central base 1A of the composter 1, and is equipped on the other end with wheels 21 rolling on the rail 2.

The winding arm 20 is arranged in the radial direction of the composter 1 so as to be rotatable around the central base 1A of the composter 1 in the same manner as the stirring apparatus 101. The wheels 21 are reciprocally driven by the motor equipped with a speed reducer 22. The rotational speed of the winding arm 20 by the motor 22 is, for example, approximately 1.0 to 2.0 m/min which is faster than that of the stirring apparatus 101, i.e., 0.2 to 0.3 m/min.

On the winding arm 20 are arranged a belt-conveyer 23 for transferring material M along its longitudinal direction to the vicinity of the outer peripheral wall 1B of the composter 1, and a hopper 24 at the inner end of the belt-conveyer 23 for supplying material M into the composter 1. Above the hopper 24 is arranged an upwards belt-conveyer 25 for transferring material M into the hopper 24.

By such a configuration of the belt-conveyer 25, the hopper 24 and the belt-conveyer 23, material M transferred through the belt-conveyer 25 is cast off from the hopper 24 onto the belt-conveyer 23, and is supplied to the vicinity of the outer peripheral wall 1B of the composter 1 therethrough.

In order to transfer material M, an equivalent means such as a screw-conveyer can also employed in place of the combination of the belt-conveyer 23, 25 and the hopper 24.

Since the stirring apparatus 101 and the winding arm 20 both have their inner ends positioned on the center 1a of the central base 1A and have wheels 3A, 21 rolling on the rail 2 at the other ends, they both swing around the central base 1A of the composter 1.

In the apparatus of the embodiment, the stirring apparatus 101 is in operation swinging for 4 to 5 hours a day and stops for the rest of the day. On the other hand, the winding arm 20 for supplying material M is in operation for approximately the entire day, as it swings at a faster speed than the stirring apparatus 101. Therefore, it is necessary to prevent the collision between stirring apparatus 101 and the winding arm 20 which run on the same rail 2.

It is also necessary to make it possible to supply material M near the peripheral wall 1B of the composter 1 whether the stirring apparatus 101 is on the swing or not. In order to do so, both the stirring apparatus 101 and the winding arm 20 are equipped with switching device for switching the swinging direction of the winding arm 20 by changing the rotation of the motor 22 when the winding arm 20 approaches the stirring apparatus 101.

The switching device 26 is comprised of switches 27, 28 equipped on both sides of the winding arm 20 and activating members 29, 30 arranged at both ends of the winding arm 20 for igniting the switches 27, 28. As for the switches 27, 28 are used limit switches or lead switches.

By such a switching device 26, when the switches 27, 28 equipped to the winding arm 20 rotating in a high speed contacts the activating members 29, 30 and is activated thereby, the motor 22 of the winding arm 20 revolves in the reverse direction. In this manner, the winding arm 20 can swing continuously whether the stirring apparatus 101 is in movement or not, or however fast it moves, so that material M can be supplied into the composter 1 via the belt-conveyer 23, the hopper 24 and the belt-conveyer 25.

In the above embodiment, the switching device 26 changes the rotational direction of the winding arm 20 through the switches 27, 28 and activating members 29, 30. However, the switching device 26 is not limited to the above construction.

At the center of the bottom of the composter 1, an output port 32 is formed for extracting the manure produced through composting. A screw-conveyer 34 is equipped on the extracting passage 33 formed beneath the output port 32.

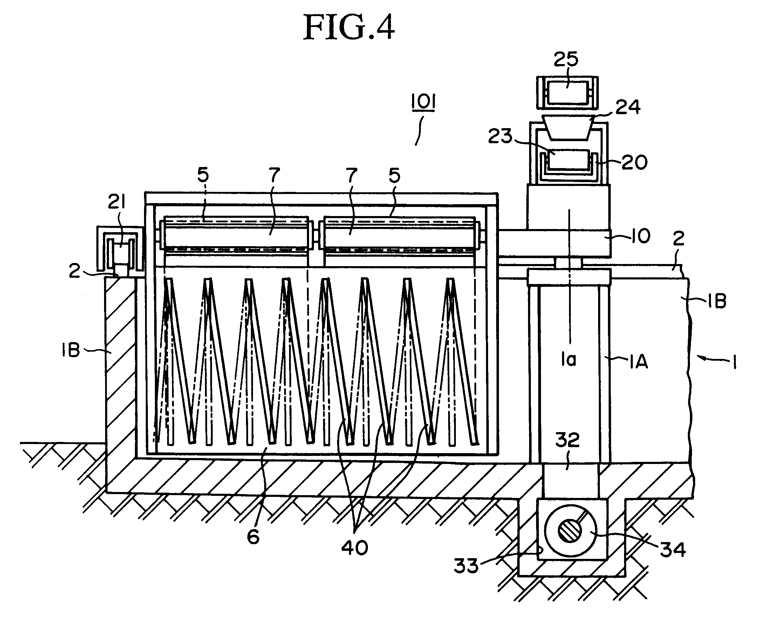

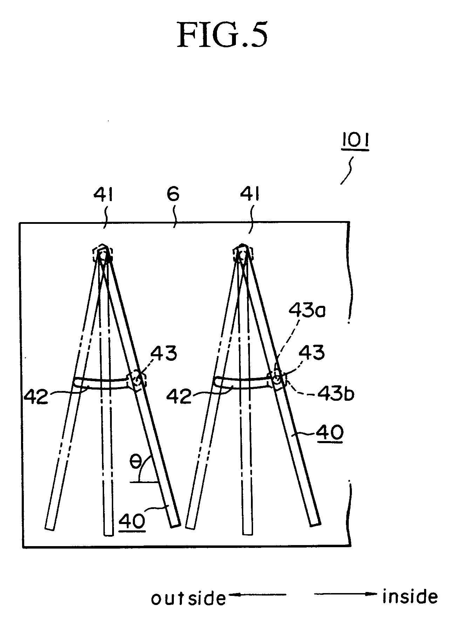

On the pressure board 6 of the stirring apparatus 101, as shown in Figs. 4 and 5, a plurality of guiding plates 40 are formed in order to allow material M, which is sent by the vanes along the arrow (c), to slide thereon in the composter 1. The guiding plate 40 is mounted on the pressure board 6 by a pin 41 at the top thereof so as to be rotatable thereabout as shown in Fig. 5. The guiding plate 40 has a tying means 43 comprising a bolt 43a and a nut 43b. The bolt 43a is planted on the side edge of the guiding plate 40 and is inserted into a circular slit 42 formed on the pressure board 6. Thus, by tying the nut 43b after setting the guiding plate 40 to a preferred position, the guiding plate 40 can be arranged at any suitable angle ϑ relative to the horizontal direction.

The guiding plate 40 is usually arranged to be inclined in a manner such that the bottom end thereof is directed to the inside of the composter 1. The angle of the inclination is usually determined in accordance with the diameter of the composter 1. That is, the greater the diameter of the composter, the smaller the inclination of the guiding plate 40 (angle ϑ is set small), so as to increase the radial transferring distance of material M toward the center of the composter 1 at each scraping operation. On the other hand, the smaller the diameter of the composter 1, the greater the angle of inclination and thus, the steeper the guiding plate 40 (angle ϑ is set large), so as to decrease the radial transferring distance of material M toward the center of the composter 1.

In the above-described guiding plate 40, by controlling the inclination angle of the guiding plate 40, the radial transferring distance of material M toward the center of the composter 1 at each scraping operation can be adjusted to a suitable value so as to make it unnecessary to arrange the stirring apparatus 100 eccentric to the composter 1, or to change the thickness W of stirring apparatus 100 according to the diameter of the composter 1.

Accordingly in such a configuration, i.e. one in which the stirring apparatus 100 is not eccentric to the composter 1, and the axis of the stirring apparatus 101 passes through the center 1a of the central base 1A of the composter 1, the present invention is superior to the prior art as follows .
(1) The apparatus can smoothly perform mixing and composting operation by preventing material M from entering into the space X between the stirring apparatus 100 and the central base 1A of the composter 1, or into the space Y between the stirring apparatus 100 and the outer peripheral wall 1B of the composter 1 (X and Y are shown in Fig. 8).
(2) By changing the attachment angle of the guiding plate 40 to the pressure board 6, the apparatus of the invention can control the transferring speed of material M toward the center of the composter 1 without being influenced by the thickness W of the stirring apparatus 101 so that it can uniformize the processing time for composting to produce manure of stable quality.

Further, since the adjustment of the transferring speed of material M toward the center of the composter 1 is done by changing the attachment angle of the guiding plate 40, it is unnecessary to change the thickness W in accordance with the diameter of the composter 1 as in the prior art. Therefore, the stirring apparatus 101 having the same thickness W can be adapted to composters 1 of different diameters so as to reduce the facility cost or operation cost of the stirring and composting apparatus.

In the above-described embodiment, the guiding plate 40 is designed to change the attachment angle in combination with the pin 41, the slit 42 and the tying means 43, however, the embodiments of the present invention are not restricted to such construction.

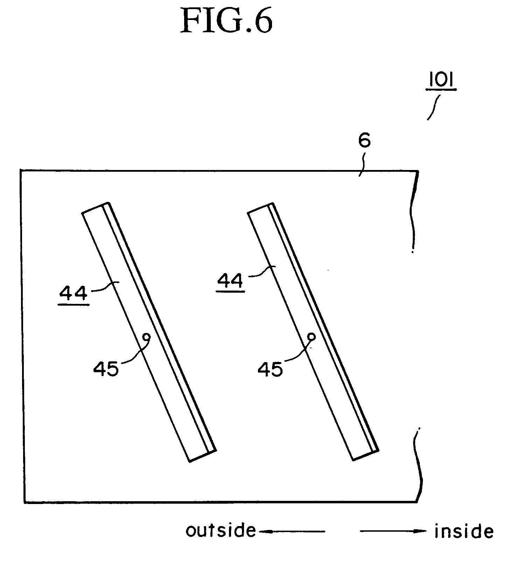

Another embodiment is shown in Fig. 6, in which a bolt 45 is equipped at the longitudinal center of the guiding plate 44. In accordance with this embodiment, the adjustment of the angle of the guiding plate 40 is performed by loosening the bolt 45 and then rotating the guiding plate 40 about the bolt 45 to a desired angle, followed by tightening of the bolt 45. The guiding plate 44 has an L-shape cross-section so as to prevent the falling material M from sticking to the bolt 45.

In the stirring and composting apparatus of the above embodiments, the angle of the guiding plate 40, 44 is not only adjusted in accordance with the diameter of the composter 1, but is also adjusted in accordance with the water content of material M, environmental temperature, and the like.

Further, in the stirring and composting apparatus, material M is charged in the vicinity of the outer peripheral wall 1B of the composter 1, and the products are drawn out from the output port 32 at the center of the bottom of the composter 1, however, the design is not limited to just this construction.
For example, material M may be charged in the center of the composter 1, and the products may be drawn from the output port formed near the peripheral wall 1B of the composter 1. By the apparatus of the latter type, the bottom of the guiding plate 40, 44 is inclined to approach the outer side of the composter 1.

Furthermore, in the stirring and composting apparatus of the present embodiments, the stirring apparatus 101 is moved by the pressure of material M acting on the pressure board 6. However, it may also be moved by a motor with a speed reducer equipped to the wheels 3A.

In the above-described embodiment, the guiding plate 40, pin 41, the slit 42, the tying means 43, the guiding plate 44 and the bolt 45 construct a guiding device, and the pin 41, the slit 42, the tying means 43 and the bolt 45 construct an adjusting device for the guiding device.

## Claims

1. A stirring and composting apparatus for stirring material such as excrement and composting it for a period of time comprising:
a composter of a cylindrical shape for accumulating material having a central base and a peripheral wall;
a stirring apparatus having a frame and a transferring means, said frame being arranged between the central base and the peripheral wall in a rotatable manner around said central base, said transferring means being held by said frame for transferring material from the front side of the frame to the rear side thereof, with respect to the direction of rotation of the frame, characterized by
a guiding means located at the rear side of the frame for guiding transferred material in the radial direction of the composter.

2. A stirring and composting apparatus according to claim 1, further comprising a pressure board attached to the frame, wherein said guiding means is arranged on the pressure board, said pressure board being inclined relative to a vertical plane so as to drive the frame by the pressure of material transferred by the transferring means.

3. A stirring and composting apparatus according to claim 1, wherein said central base is concentral to the composter.

4. A stirring and composting apparatus according to claim 1, wherein said transferring means includes a belt-conveyer moving in the vertical direction.

5. A stirring and composting apparatus according to claim 1, further comprising a rail on the edge of the composter, said frame having wheels rolling on said rail.

6. A stirring and composting apparatus according to claim 1, wherein said guiding means comprises a guiding member having an oblique surface for transferring the dropped material in the radial direction of the composter.

7. A stirring and composting apparatus according to claim 6, wherein the angle of attachment of said guiding member is changeable.

8. A stirring and composting apparatus according to claim 7, wherein said guiding member has a L-shape cross section.

9. A stirring and composting apparatus according to claim 7, wherein said guiding member is attached by a pin at one end, said guiding member having a tying means for tying said guiding member at preferred location.

10. A stirring and composting apparatus according to claim 7, wherein said guiding member is connected by a bolt.

11. A stirring and composting apparatus according to claim 1, further comprising an output port at the center of the bottom of the composter for extracting products.

12. A stirring and composting apparatus according to claim 1, further comprising a supplying means for supplying material into composter at the vicinity of the peripheral wall of the composter.

13. A stirring and composting apparatus according to claim 12, wherein said supplying means is arranged rotatable about the central base.

14. A stirring and composting apparatus according to claim 5, further comprising a supplying means for supplying material into composter at the vicinity of the peripheral wall of the composter, said supplying means having wheels rolling on said rail, and a means for avoiding a collision between the supplying means and the frame by detecting the approach therebetween.

## Patentansprüche

1. Ein Rühr- und Kompostiergerät zum Rühren von Material wie z. B. Exkrementen und zum Kompostieren hiervon über eine Zeitdauer hinweg, mit:
einem Komposter mit zylindrischer Form mit einer mittigen Basis und einer Umfangswand zur Aufnahme von Material;
einer Rührvorrichtung mit einem Rahmen und einer Übergabevorrichtung, wobei der Rahmen zwischen der mittigen Basis und der Umfangswand in drehbarer Weise um die mittige Basis herum angeordnet ist, wobei die Übergabevorrichtung von dem Rahmen gehalten wird, um Material von der Vorderseite des Rahmens zur Rückseite hiervon bezüglich der Drehrichtung des Rahmens gesehen zu übertragen,
gekennzeichnet durch
eine Führungsvorrichtung, die an der Rückseite des Rahmens angeordnet ist, um das übertragene Material in Radialrichtung des Komposters zu führen.

2. Ein Rühr- und Kompostiergerät nach Anspruch 1, weiterhin mit einer Druckplatte an dem Rahmen, wobei die Führungsvorrichtung an der Druckplatte angeordnet ist, wobei die Druckplatte relativ zu einer vertikalen Ebene so geneigt ist, daß der Rahmen durch den Druck des Materials, welches von der Übergabevorrichtung übergeben wird, angetrieben wird.

3. Ein Rühr- und Kompostiergerät nach Anspruch 1, wobei die mittige Basis zu dem Komposter konzentrisch ist.

4. Ein Rühr- und Kompostiergerät nach Anspruch 1, wobei die Übergabevorrichtung einen Bandförderer aufweist, der sich in vertikaler Richtung bewegt.

5. Ein Rühr- und Kompostiergerät nach Anspruch 1, weiterhin mit einer Schiene an der Kante des Komposters, wobei der Rahmen Räder hat, welche auf der Schiene laufen.

6. Ein Rühr- und Kompostiergerät nach Anspruch 1, wobei die Führungseinrichtung ein Führungsteil aufweist mit einer schrägen Oberfläche zum Übertragen von herabgefallenen Material in Radialrichtung des Komposters.

7. Ein Rühr- und Kompostiergerät nach Anspruch 6, wobei der Anbringwinkel des Führungsteils änderbar ist.

8. Ein Rühr- und Kompostiergerät nach Anspruch 7, wobei das Führungsteil einen L-förmigen Querschnitt hat.

9. Ein Rühr- und Kompostiergerät nach Anspruch 7, wobei das Führungsteil mit einem Zapfen an einem Ende festgelegt ist, wobei das Führungsteil eine Verspannvorrichtung aufweist, um das Führungsteil in einer gewünschten Ausrichtung zu verspannen.

10. Ein Rühr- und Kompostiergerät nach Anspruch 7, wobei das Führungsteil durch einen Bolzen verbunden ist.

11. Ein Rühr- und Kompostiergerät nach Anspruch 1, weiterhin mit einem Ausgangsanschluß im Mittelpunkt des Bodens des Komposters zum Abziehen von Produkten.

12. Ein Rühr- und Kompostiergerät nach Anspruch 1, weiterhin mit einer Zufuhrvorrichtung zur Zufuhr von Material in den Komposter im Nahbereich der Umfangswand des Komposters.

13. Ein Rühr- und Kompostiergerät nach Anspruch 12, wobei die Zufuhrvorrichtung drehbar um die mittige Basis herum angeordnet ist.

14. Ein Rühr- und Kompostiergerät nach Anspruch 5, weiterhin mit einer Zufuhrvorrichtung zur Zufuhr von Material in den Komposter im Nahbereich der Umfangswand des Komposters, wobei die Zufuhrvorrichtung Räder hat, welche auf der Schiene rollen und wobei eine Vorrichtung zum Vermeiden eines Zusammenstoßes zwischen der Zufuhrvorrichtung und dem Rahmen durch Erkennung deren Annäherung aneinander vorgesehen ist.

## Revendications

1. Appareil d'agitation et de compostage destiné à agiter une matière telle que des excréments et à la composter pendant une période de temps, comportant :
un composteur de forme cylindrique destiné à accumuler de la matière et ayant une base centrale et une paroi périphérique ;
un appareil d'agitation ayant un châssis et des moyens de transfert, ledit châssis étant disposé entre la base centrale et la paroi périphérique de manière à pouvoir tourner autour de ladite base centrale, lesdits moyens de transfert étant maintenus par ledit châssis pour transférer de la matière depuis le côté avant du châssis vers son côté arrière, par rapport au sens de rotation du châssis, caractérisé par
des moyens de guidage placés au côté arrière du châssis pour aider de la matière transférée dans la direction radiale du composteur.

2. Appareil d'agitation et de compostage salon la revendication 1, comportant en outre une place de pression reliée au châssis, lesdits moyens de guidage étant disposés sur la plaque de pression, ladite plaque de pression étant inclinée par rapport à un plan vertical afin d'entraîner le châssis sous la pression de la matière transférée par les moyens de transfert.

3. Appareil d'agitation et de compostage selon la revendication 1, dans lequel ladite base centrale est concentrique au composteur.

4. Appareil d'agitation et de compostage selon la revendication 1, dans lequel lesdits moyens de transfert comprennent un transporteur à bande se déplaçant dans la direction verticale.

5. Appareil d'agitation et de compostage selon la revendication 1, comportant en outre un rail sur le bord du composteur, ledit châssis ayant des roues roulant sur ledit rail.

6. Appareil d'agitation et de compostage selon la revendication 1, dans lequel lesdits moyens de guidage comprennent un élément de guidage ayant une surface oblique pour transférer dans la direction radiale du composteur la matière versée.

7. Appareil d'agitation et de compostage salon la revendication 6, dans lequel l'angle de montage dudit élément de guidage peut être modifié.

8. Appareil d'agitation et de compostage selon la revendication 7, dans lequel ledit élément de guidage présente une section transversale de forme en L.

9. Appareil d'agitation et de compostage selon la revendication 7, dans lequel ledit élément de guidage est monté au moyen d'un axe à une extrémité, ledit élément de guidage ayant Un moyen de liaison destiné à lier ledit élément de guidage en un emplacement préféré.

10. Appareil d'agitation et de compostage selon la revendication 7, dans lequel ledit élément de guidage est relié par un boulon.

11. Appareil d'agitation et de compostage selon la revendication 1, comportant en outre un orifice de sortie au centre du fond du composteur pour l'extraction de produits.

12. Appareil d'agitation et de compostage selon la revendication 1, comportant en outre des moyens d'alimentation pour introduire de la matière dans le composteur au voisinage de la paroi périphérique du composteur.

13. Appareil d'agitation et de compostage selon la revendication 12, dans lequel lesdits moyens d'alimentation sont disposés de façon à pouvoir tourner autour de la base centrale.

14. Appareil d'agitation et de compostage selon la revendication 5, comportant en outre des moyens d'alimentation pour introduire de la matière dans le composteur au voisinage de la paroi périphérique du composteur, lesdits moyens d'alimentation ayant des roues roulant sur ledit rail, et des moyens pour éviter une collision entre les moyens d'alimentation et le châssis en détectant leur rapprochement l'un de l'autre.
